Europäisches Patentamt

**European Patent Office**

Office européen des brevets

(19)

(11) Numéro de publication: **0 012 085**

A1

(12) # DEMANDE DE BREVET EUROPEEN

(21) Numéro de dépôt: **79400934.0**

(22) Date de dépôt: **29.11.79**

(51) Int. Cl.³: **F 16 H 21/36**

(30) Priorité: **04.12.78 FR 7834132**

(43) Date de publication de la demande:
**11.06.80 Bulletin 80/12**

(84) Etats Contractants Désignés:
**AT DE GB IT NL SE**

(71) Demandeur: **Boitelle, Georges**
**85, rue des Deux Frères Laporte**
**F-78680 Epone(FR)**

(72) Inventeur: **Boitelle, Georges**
**85, rue des Deux Frères Laporte**
**F-78680 Epone(FR)**

(54) **Dispositif de transformation d'un mouvement rectiligne alternatif en un mouvement rotatif et vice-versa et application en résultant.**

(57) Le dispositif selon l'invention comprend un pignon (2) qui roule sans glissement à l'intérieur d'une couronne dentée fixe (1) de diamètre double, le dit pignon étant maintenu dans sa course par un ou plusieurs pignons (5) satellites et par un flasque mobile (6).

L'invention s'applique dans tout dispositif exigeant la transformation de mouvement alternatifs ou circulaires.

FIG 1

EP 0 012 085 A1

La présente invention a pour objet un dispositif de transformation d'un mouvement rectiligne alternatif en un mouvement rotatif, ou vice-versa, et les différentes applications qui peuvent en résulter.

Il existe de nombreux types de chaines cinématiques qui permettent de transformer un mouvement alternatif en un mouvement de rotation et réciproquement. Le système le plus répandu, dans les moteurs à combustion interne par exemple, est constitué par un système bielle manivelle. Ces embiellages ont un mouvement oscillant qui provoque des frottements donc l'usure des cylindres et leur ovalisation. De plus le villebrequin subit des poussées considérables qui ne sont pas converties en couple. Les surfaces de frottement sont nombreuses. L'équilibrage des pièces tournantes est délicat et se fait généralement par adjonction de masses, qui diminuent la vitesse maximale de rotation.

Afin de palier ces inconvénients on a essayé différents systèmes conjuguant les mouvements de glissement et de rotation par combinaison de pignons, glissières, manivelles et exentriques. Ces systèmes comportent également des points de frottement occasionnant l'usure des pièces et des pertes de rendement.

La présente invention a pour objet de remédier à ces différents inconvénients en obtenant la transformation d'un mouvement linéaire alternatif en un mouvement circulaire avec le minimum de pièces en mouvement, donc en supprimant le maximum de frottements et réduisant les masses en mouvement. L'invention repose sur le principe bien connu du déplacement linéaire d'un point d'une circonférence qui roule sans glisser à l'intérieur d'une autre circonférence fixe de diamètre double. Le mouvement alternatif est appliqué sur ce point et transmis à la circonférence tangentant intérieurement la circonférence de diamètre double qui roule sans glisser à l'intérieur de la dite circonférence de diamètre double transformant ainsi le mouvement alternatif en mouvement rotatif.

La présente invention se caractérise en outre par le fait que l'organe mobile qui porte la circonférence tangentielle est maintenu dans sa course circulaire autour de l'axe du dispositif à l'intérieur d'une couronne circulaire fixe ayant un diamètre double, par un ou plusieurs organes mobiles satellites et par un flasque mobile recevant les axes des dits organes mobiles.

La présente invention se caractérise également par le fait que le point d'application de la force alternative sur l'organe mobile portant la circonférence tangentielle est opposé au point d'insertion de l'axe du dit organe mobile dans le flasque mobile.

La présente invention se caractérise encore par le fait que le mouvement circulaire est transmis en sortie, non pas par un ou plusieurs engrenages, mais par les axes des organes mobiles grâce à un flasque mobile.

. La présente invention se caractérise enfin par le fait que les organes mobiles portent des zones d'engrènement, de roulement ou de guidage nettement dissociées, qui coopèrent avec les zones homologues de la couronne circulaire fixe.

Afin de ne pas alourdir la suite du texte, le terme organe mobile sera remplacé plus couramment par le terme pignon.

La présente invention sera mieux comprise à la lecture de la description d'une de ses réalisations et à l'examen des dessins annexés sur lesquels :

- La figure I est un schéma illustrant une réalisation de l'invention.

- La figure 2 est une vue en coupe suivant la ligne II-II de la figure I montrant la disposition des pignons.

- La figure 3 est une vue en coupe montrant un montage double du dispositif selon l'invention.

- La figure 4 est une vue montrant le dispositif selon l'invention avec un réducteur de vitesse.

En se reportant aux figures I et 2 on voit que le dispositif selon l'invention se compose d'une couronne circulaire fixe I

0012085

à l'intérieur de laquelle roule sans glisser un pignon circulaire 2 de diamètre I/2. Sur la circonférence du pignon 2 est disposé un axe 3 sur lequel la force alternative sera appliquée par l'intermédiaire d'une tige 4 rigide qui ne peut avoir qu'un mouvement linéaire alternatif comme indiqué par la flèche F.

Un second pignon 5, de diamètre inférieur au pignon 2 roule également à l'intérieur de la couronne I et joue le rôle de satellite. Les axes des pignons 2 et 5 sont supportés par un flasque mobile 6 qui transmet le mouvement circulaire et maintient les pignons 2 et 5 à l'écartement convenable de manière que ceux-ci puissent tourner sans jeu à l'intérieur de la couronne I.

L'ensemble du dispositif est fermé des deux côtés par deux flasques 7 et 8. Le flasque 7 est traversé par l'axe 9 du flasque 6.

Si le dispositif doit supporter des efforts très importants il suffit de disposer symétriquement de part et d'autre de la tige 4, un ensemble identique à celui précédemment décrit comme représenté sur la figure 3 .

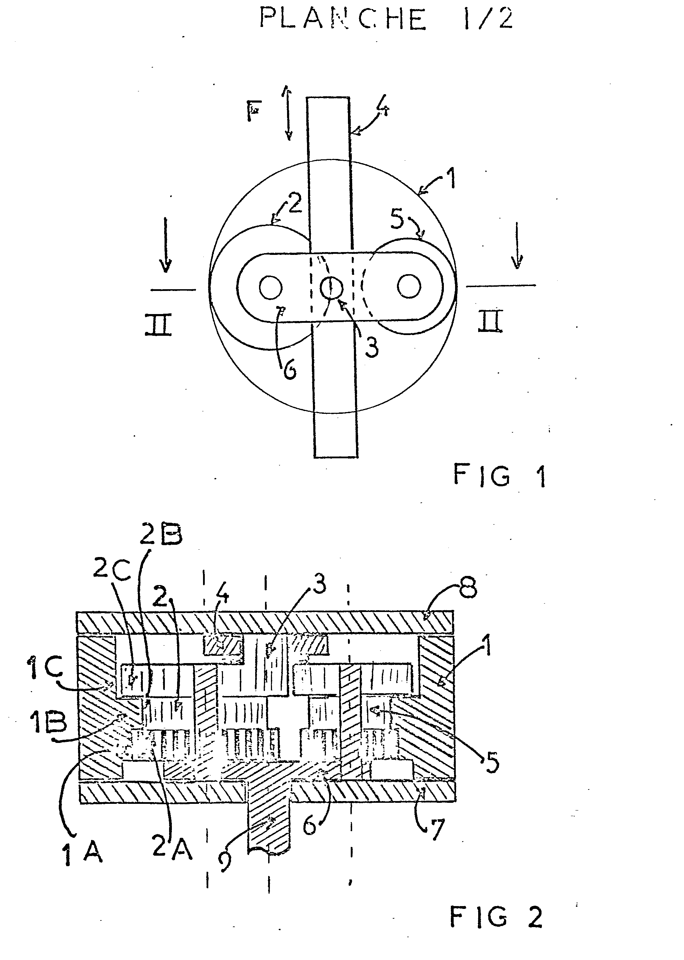

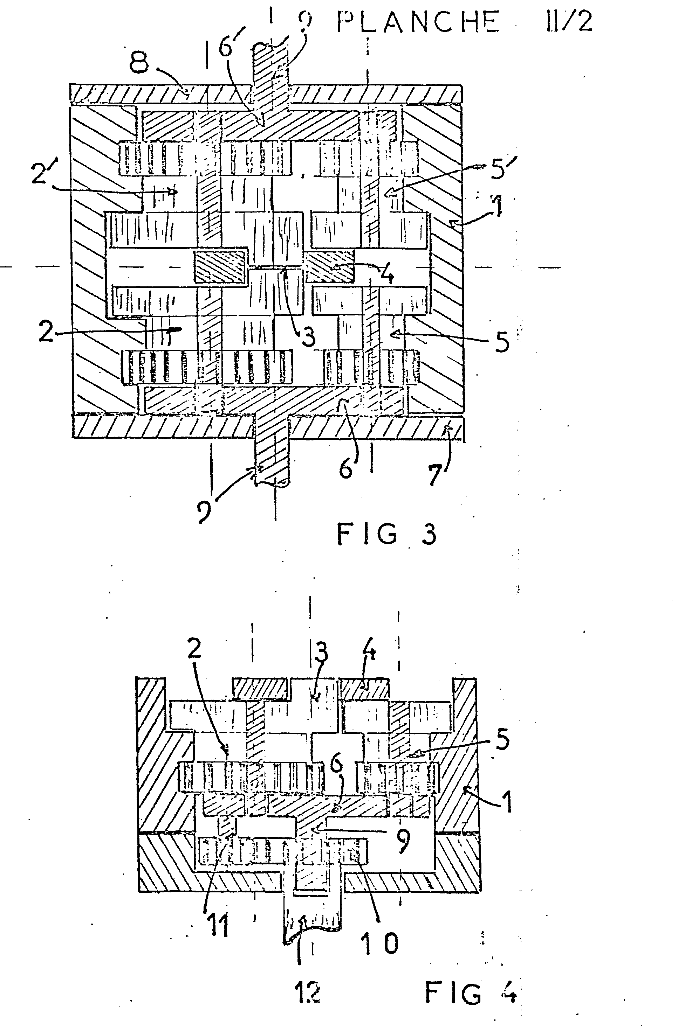

Dans cette réalisation on retrouve tous les éléments de la figure 2, disposés de part et d'autre de la tige 4, mais il faut noter que l'on obtient deux axes 9 et 9' animés d'un mouvement rotatif.

Il va de soi que les masses ainsi que les diamètres des pignons 2 et 5 sont calculés afin de maintenir l'équilibre dynamique des masses en mouvement en ayant soin de déterminer les masses minimales compte tenu des efforts subis..

Comme représenté sur les figures 2 et 3 la couronne I et le pignon 2 comportent trois zones.

La première zone Ia respectivement 2a, est constituée d'une denture quelconque s'opposant au glissement relatif du pignon 2 et de la couronne I et s'engrenant correctement pendant toutes les phases de fonctionnement.

La seconde zone Ib respectivement 2b, est lisse et assure le roulement des pignons 2 et 5 à l'intérieur de la couronne I.

La troisième zone Ic respectivement 2c, est une gorge assurant le guidage des pignons 2 et 5. Cette gorge n'est toutefois pas indispensable. Le ou les pignons satellites 5 comportent obligatoirement une zone 5b destinée à coopérer avec la zone Ib de la couronne I. Les axes des pignons 2 et 5 sont opposés (fig 2 et 3) à l'axe 3 porté par le pignon 2 qui assure l'application du mouvement alternatif transmis par la tige 4.

La transmission du mouvement rotatif peut être faite également par l'intermédiaire d'un réducteur de vitesse ou d'un dispositif de surélévation de vitesse comme représenté sur la figure 4. Sur cette figure on retrouve les mêmes éléments (avec les mêmes références) que sur les figures précédentes. Le dispositif de réduction de vitesse est constitué par deux pignons IO et II de rapport convenable de manière à obtenir la vitesse désirée.

La fabrication du dispositif ci-dessus décrit ne présente aucune difficulté. Le fonctionnement du dispositif est le suivant dans le cas de la transformation d'un mouvement linéaire alternatif en un mouvement rotatif (fig I et 2).

Partant du point mort haut du dispositif une force appliquée sur l'axe 3 par la tige 4 provoque la rotation du pignon 2. Le centre de celui-ci décrit un cercle. La force appliquée au pignon 2 se décompose alors en une force radiale qui est supportée par la zone Ib de la couronne extérieure I et des pignons 2 et 5 et en une force tangentielle à laquelle s'oppose les dentures de la couronne I et du pignon 2. L'axe 3 décrit une trajectoire rectiligne.

Arrivé au point mort bas la force appliquée à l'axe 3 s'inverse et le processus continue. La rotation de l'axe du pignon 2 entraine le flasque mobile 6 dans un mouvement circulaire et fait donc tourner l'axe 9. Le pignon satellite 5 maintient le pignon 2 dans sa trajectoire circulaire au tour de l'axe virtuel du dispositif.

0012085

Dans le cas de la transformation d'un mouvement circulaire en un mouvement alternatif, le mouvement circulaire est appliqué à l'axe 9 du flasque mobile 6 ce qui provoque par l'intermédiaire du pigon 2 et de la couronne I le déplacement linéaire alternatif de la tige 4 fixée à l'axe 3 pour les raisons exposées ci-dessus.

Dans le cas d'une utilisation du dispositif de la figure 3 on dispose de deux axes 9 et 9' pour l'application du mouvement circulaire. Il faut noter que dans les deux utilisations décrites ci-dessus et dans tous les cas la couronne I est fixe.

La présente invention apporte les améliorations suivantes avec une grande économie de moyens :

-l'organe d'entraînement du dispositif a un mouvement linéaire qui permet de simplifier le piston dans les pompes, compresseurs moteurs, par exemple.

- les axes qui transmettent en sortie du dispositif le mouvement circulaire ou alternatif ne subissent aucun effort transversal, permettant de prévoir une étanchéité durable.

- le diagramme de couple du dispositif est très étendu et le rendement est toujours supérieur à celui du système bielle - villebrequin.

- les forces centrifuges sont supportées par la couronne extérieure.

- les frottements sont réduits au niveau des dentures des pignons puisque la compensation des forces centrifuges se fait sur la bande de roulement de la couronne et des pignons.

- le flasque d'un côté et l'organe de transmission du mouvement alternatif de l'autre côté contribuent à maintenir les pignons dans le plan du dispositif.

- le sens de rotation peut être positif ou négatif quelque soit le sens de transformation du mouvement.

Le dispositif de transformation de mouvement selon l'invention peut être utilisé dans toutes les applications nécessitant la transformation d'un mouvement alternatif en mouvement circulaire ou vice-versa notamment dans les moteurs à combustion interne pour remplacer

0012085

l'ensemble bielle-villebrequin, dans les moteurs hydrauliques, dans les compresseurs, et dans tout le dispositif nécessitant la transformation du mouvement par exemple scie alternative, machines à coudre, moto-faucheuse, marteau pilon, transformation en énergie du mouvement des vagues etc..

0012085

## - REVENDICATIONS -

1°) Dispositif de transformation d'un mouvement rectiligne alternatif en un mouvement rotatif et vice-versa basé sur le principe du déplacement linéaire d'un point d'une circonférence qui roule sans glisser à l'intérieur d'une circonférence de diamètre double caractérisé en ce qui est constitué d'un flasque mobile qui porte sur une de ses faces un axe de transmission du mouvement rotatif et sur son autre face au moins deux axes parallèles au précédent autour desquels tournent des organes mobiles qui, s'appuyant sur l'intérieur d'une couronne circulaire fixe, maintiennent le flasque mobile dans sa rotation à l'intérieur de la dite couronne circulaire fixe, de manière que l'axe de transmission du mouvement rotatif reste toujours confondu avec lui-même et avec l'axe virtuel de la couronne circulaire fixe lors de la rotation de l'ensemble à l'intérieur de·la couronne circulaire fixe.

2°) Dispositif de transformation d'un mouvement rectiligne alternatif en un mouvement rotatif et vice-versa basé sur le principe du déplacement linéaire d'un point d'une circonférence qui roule sans glisser à l'intérieur d'une circonférence de diamètre double selon I caractérisé en ce que la couronne circulaire fixe et un des organes mobiles comportent chacun, de manière nettement différenciée, une zone d'engrènement, une zone de roulement et une zone de guidage, les autres organes mobiles comportant au moins une zone de roulement, de manière que les zones d'engrènement des organes mobiles coopèrent avec la zone d'engrènement de la couronne circulaire fixe et que les zones de roulement des organes mobiles coopèrent avec la zone de roulement de la couronne circulaire fixe, la force alternative étant appliquée par l'intermédiaire d'un axe à la zone de guidage du premier organe mobile.

3°) Dispositif de transformation d'un mouvement rectiligne alternatif en un mouvement rotatif et vice-versa basé sur le principe du déplacement linéaire d'un point d'une circonférence qui roule sans glisser à l'intérieur d'une circonférence de diamètre doublé selon l'une quelconque des revendications I ou 2 caractérisé en ce que le flasque mobile porte sur une de ses faces un axe d'entrainement ro-

0012085

tatif et sur l'autre face, trois axes parallèles au précédent, disposés de manière dissymètrique afin d'obtenir un couple quelque soit la position du point d'application de la force alternative.

012085

FIG 1

FIG 2

FIG 3

FIG 4

| Catégorie | Citation du document avec indication, en cas de besoin, des parties pertinentes | Revendication concernée |
|---|---|---|
| | CH - A - 290 688 (EDUARD TSCHOPP)<br>* Page 1, ligne 45 à page 2, ligne 20; figures 1,2 *<br><br>-- | 1,2 |
| | DE - A - 2 511 660 (INGO LIST)<br>* Colonne 3, lignes 32-65; figure 1 *<br><br>-- | 1 |
| A | FR - A - 1 550 585 (CHOPLIN)<br>* Page 1, colonne de gauche, lignes 29-33; figure 3 *<br><br>-- | 1 |
| A | GB - A - 6 044 AD 1915 (HIGGINSON)<br>* Page 2, ligne 60 à page 3, ligne 25; figures 1,2 *<br><br>-- | 1 |
| A | DE - A - 2 333 561 (HALLER)<br>* Page 3, revendications 3,4 *<br><br>---- | 1 |

**DOCUMENTS CONSIDERES COMME PERTINENTS**

**CLASSEMENT DE LA DEMANDE (Int. Cl. 3)**

F 16 H 21/36

**DOMAINES TECHNIQUES RECHERCHES (Int. Cl. 3)**

F 16 H 21/00

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons
&: membre de la même famille, document correspondant

Le présent rapport de recherche a été établi pour toutes les revendications

| Lieu de la recherche | Date d'achèvement de la recherche | Examinateur |
|---|---|---|
| La Haye | 12-03-1980 | BEERNAERT |

OEB Form 1503.1  06.78